Europäisches Patentamt

European Patent Office

Office européen des brevets

(19)

(11) Veröffentlichungsnummer : **0 010 308**
**B1**

# (12) EUROPÄISCHE PATENTSCHRIFT

(45) Veröffentlichungstag der Patentschrift :
24.11.82

(21) Anmeldenummer : 79104050.4

(22) Anmeldetag : 19.10.79

(51) Int. Cl.³ : **C 08 G  69/26, C 08 G  69/28**

(54) Glasklare Polyamide, Verfahren zu ihrer Herstellung und ihre Verwendung.

(30) Priorität : 24.10.78 DE 2846226

(43) Veröffentlichungstag der Anmeldung :
30.04.80 (Patentblatt 80/09)

(45) Bekanntmachung des Hinweises auf die Patenterteilung : 24.11.82 Patentblatt 82/47

(84) Benannte Vertragsstaaten :
CH DE FR GB IT NL

(56) Entgegenhaltungen :
FR A 2 324 672
GB A 619 707
US A 3 703 595

(73) Patentinhaber : BASF Aktiengesellschaft
Carl-Bosch-Strasse 38
D-6700 Ludwigshafen (DE)

(72) Erfinder : Cordes, Claus, Dr. Dipl.-Chem.
Halbergstrasse 13
D-6719 Weisenheim (DE)
Erfinder : Pflueger, Richard, Ing. grad.
Am Weidenschlag 20
D-6700 Ludwigshafen (DE)
Erfinder : Schmidt, Franz, Dr. Dipl.-Chem.
Trommstrasse 3
D-6800 Mannheim 1 (DE)
Erfinder : Simon, Georg Nikolaus, Dr. Dipl.-Ing.
Unter Hart 10
D-6703 Limburgerhof (DE)

Jouve, 18, rue St-Denis, 75001 Paris, France

## Glasklare Polyamide, Verfahren zu ihrer Herstellung und ihre Verwendung

Die Erfindung betrifft glasklare Polyamide auf Basis von aromatischen Dicarbonsäuren und dialicyclischen Diaminen.

In der GB-PS 619 707 sind transparente Polyamide aus dialicyclischen Diaminen und vorzugsweise aliphatischen Dicarbonsäuren beschrieben. Derartige Produkte sind bei Temperaturen oberhalb von 100 °C nicht dimensionsstabil.

Nach der US-PS 2 696 482 soll daher als Dicarbonsäure Isophthalsäure verwendet werden. Diese Polyamide haben jedoch eine zu hohe Schmelzviskosität, so daß ihre Verarbeitung schwierig ist.

In der US-PS 3 597 400 werden transparente Polyamide beschrieben, die aus Terephthalsäure und Isophthalsäure einerseits und Bis(4-aminocyclohexyl)methan und Hexamethylendiamin andererseits bestehen. Diese Produkte weisen eine niedrige Erweichungstemperatur und eine unbefriedigende Schlagzähigkeit auf.

Aus der DE-OS 26 42 244 sind schließlich glasklare Polyamide bekannt geworden, die hergestellt werden durch Polykondensation von 3,3'-Dimethyl-4,4'-diamino-dicyclohexylmethan, Isophthalsäure und Laurinlactam. Die Mischung dieser Ausgangsstoffe zeigt eine sehr ungünstige Löslichkeit in Wasser, so daß bei der Herstellung in technischem Maßstab, insbesondere bei kontinuierlichen Verfahren, große Mengen Wasser verdampft werden müssen.

Der Erfindung lag also die Aufgabe zugrunde, glasklare Polyamide bereitzustellen, die eine gute Verarbeitbarkeit, hohe Glastemperaturen, sowie hervorragende Zähigkeit, Härte und Steifigkeit aufweisen. Die Polyamide sollten aus leicht zugänglichen Ausgangsstoffen aufgebaut sein und ihre Herstellung sollte auch in kontinuierlichen Verfahren auf einfache Weise möglich sein.

Es wurde gefunden, daß diese Bedingungen erfüllt sind bei Polykondensaten, die bestehen aus

A. Isophthalsäure und Adipinsäure mit einem Gehalt von mindestens 70 Mol% Isophthalsäure und bis zu 30 Mol% Adipinsäure, und
B. 20-60 Mol% 3,3'-Dimethyl-4,4'-diaminodicyclohexylmethan und
80-40 Mol% Hexamethylendiamin.

Die zur Herstellung der erfindungsgemäßen glasklaren Polyamide verwendete Mischung der Ausgangsstoffe ist gut wasserlöslich. Es ist somit möglich, hohe Feststoffgehalte einzustellen, so daß nur wenig Energie für Wasserverdampfung aufgewendet werden muß. Die Ausgangsstoffe können problemlos gefördert und dosiert werden, was vor allem bei kontinuierlicher Polykondensation wichtig ist. Schließlich können die Mengenverhältnisse über pH-Messung bequem eingestellt werden.

Die erfindungsgemäßen Polyamide sind Polykondensate aus 3,3'-Dimethyl-4,4'-diaminodi-cyclohexylmethan (Dimethyldicycan) und Hexamethylendiamin einerseits und Isophthalsäure, welche teilweise durch Adipinsäure ersetzt ist, andererseits. Die Mischung der Diamine enthält 20-60 Mol%, vorzugsweise 25-50 Mol% Dimethyldicycan. Setzt man zu viel oder zu wenig dieses Diamins ein, so erhält man ein Polyamid, welches eine zu hohe Schmelzviskosität aufweist, was zu Schwierigkeiten bei der Verarbeitung führt.

Die Polykondensation wird nach Verfahren und unter Bedingungen durchgeführt, wie sie für die Herstellung von Polyamid-6,6 üblich sind. Dicarbonsäuren und Diamine werden in etwa äquivalenten Mengen eingesetzt; durch gezielte geringe Überschüsse kann die Kettenlänge des Polyamids variiert werden. Zu diesem Zweck können gegebenenfalls auch geringe Mengen Monocarbonsäuren oder Monoamine zugegeben werden. Die Polykondensation wird in wäßriger Lösung bei einem Feststoffgehalt von vorzugsweise 50 bis 75 Gew.% durchgeführt; die bevorzugte Reaktionstemperatur liegt bei 220 bis 270 °C, der Druck bei 10 bis 40 bar. Bevorzugt ist eine kontinuierliche Arbeitsweise, deren Prinzip z.B. in der DE-OS 24 17 003 beschrieben ist.

Vor, während oder nach der Polykondensation können dem Polyamid die üblichen Zusatzstoffe zugefügt werden, z.B. Stabilisatoren, Farbstoffe, Weichmacher, Flammschutzmittel und Verstärkungsmittel.

Die in den Beispielen genannten Teile und Prozente beziehen sich auf das Gewichts.

Beispiel 1

In einen 40 l Rührautoklaven wurden folgende Einsatzstoffe eingeführt: 6,65 kg $H_2O$, 4,503 kg Isophthalsäure, 2,587 kg 4,4'-Diamino-3,3'-dimethyl-dicyclohexylmethan, 1,891 kg Hexamethylendiamin und 2,320 kg AH-Salz (Adipinsäure/Hexamethylendiamin 1 : 1). Der Autoklaveninhalt wurde auf 270 °C erhitzt und unter einem Druck von 20 bar eine Stunde kondensiert, anschließend entspannt, 2 Stunden bei 280 °C nachkondensiert und mittels $N_2$-Druck ausgepreßt. Das granulierte Produkt wurde im Festzustand weiter kondensiert und die Viskositätszahl VZ von 90 auf 100 erhöht.

Das erhaltene glasklare Polyamid hatte folgende Eigenschaften: Glastemperatur 159° (DSC), Lochkerbschlagzähigkeit 55 kJ/m² bei 23° und 50 % rel. Luftfeuchte, Reißfestigkeit 70 N/mm².

Beispiel 2

In einem Rührkessel wurden 10,2 kg Hexamethylendiamin, 22,65 kg 4,4'-Diamino-3,3'-dimethyldicyclohexylmethan in 33 l Wasser vorgelegt und anschließend mit 29,96 kg Isophthalsäure und 16,23 kg AH-Salz versetzt und bei 90 °C in Lösung gebracht (pH-Wert 8,1). Die so erhaltene Lösung blieb auch bei 60 °C klar. Ein Umpumpversuch bei 90° über eine Kolbendosierpumpe zeigte nach 8 Stunden keine Änderung der Lösungsbeschaffenheit, keine Verstopfung der Pumpenteile durch Kristalle.

Die Lösung wurde in einem 150 l Rührautoklaven 2 Stunden bei 270 °C und 20 bar kondensiert, langsam entspannt und 30' im $N_2$-Strom nachkondensiert und unter $N_2$-Druck ausgepreßt und granuliert.

Das glasklare Polyamid (VZ = 101) hatte eine Glastemperatur von 165°, eine Lochkerbschlagzähigkeit von 56,7 (23 °C und 50 % rel. Luftfeuchte) und eine Reißfestigkeit von 77 N/mm.

## Ansprüche

1. Glasklare Polyamide auf Basis von aromatischen Dicarbonsäuren und dialicyclischen Diaminen, dadurch gekennzeichnet, daß es Polykondensate sind aus

A. Isophthalsäure und Adipinsäure, mit einem Gehalt von mindestens 70 Mol% Isophthalsäure und bis zu 30 Mol% Adipinsäure, und
B. 20 bis 60 Mol% 3,3'-Dimethyl-4,4'-diamino-dicyclohexylmethan und
80 bis 40 Mol% Hexamethylendiamin.

2. Verfahren zur Herstellung von glasklaren Polyamiden nach Anspruch 1, dadurch gekennzeichnet, daß man eine wäßrige Lösung, die bei einem Feststoffgehalt von 50 bis 75 Gew.% die Komponenten A und B in etwa äquivalenten Mengen enthält, auf Temperaturen von 220 °C bis 270 °C erhitzt und polykondensiert.

3. Verfahren zur Herstellung von glasklaren Polyamiden nach Anspruch 2, dadurch gekennzeichnet, daß man es kontinuierlich durchführt.

4. Verwendung der glasklaren Polyamide nach Anspruch 1 zur Herstellung von Formkörpern.

## Claims

1. A glass-clear nylon based on aromatic dicarboxylic acids and dialicyclic diamines, which is a polycondensate of

A. isophthalic acid and adipic acid, the content of isophthalic acid being at least 70 mole%, and the content of adipic acid being up to 30 mole%, and
B. 20-60 mole% of 3,3'-dimethyl-4,4'-diaminodicyclohexylmethane, and
80-40 mole% of hexamethylenediamine.

2. A process for the preparation of a glass-clear nylon as claimed in claim 1, wherein an aqueous solution which has a solids content of from 50 to 75 % by weight and contains components A and B in about equivalent amounts is heated, and polycondensed, at from 220° to 270 °C.

3. A process for the preparation of a glass-clear nylon as claimed in claim 2, wherein the polycondensation is carried out continuously.

4. Use of a glass-clear nylon as claimed in claim 1 for the production of mouldings.

## Revendications

1. Polyamides hyalins à base d'acides dicarboxyliques aromatiques et de diamines dialicycliques, caractérisés en ce qu'ils sont constitués

A. d'acide isophtalique et d'acide adipique avec au moins 70 % molaires d'acide isophtalique et jusqu'à 30 % molaires d'acide adipique et
B. de 20 à 60 % molaires de diméthyl-3,3' diamino-4,4' dicyclohexyl-méthane et
de 80 à 40 % molaires d'hexaméthylènediamine.

2. Procédé de préparation de polyamides hyalins suivant la revendication 1, caractérisé en ce que l'on chauffe une solution aqueuse qui, avec une teneur en matières solides comprise entre 50 et 75 % en poids, contient des proportions approximativement équivalentes des composants A et B, à des températures entre 220 et 270 °C pour provoquer la polycondensation.

3. Procédé pour la préparation de polyamides hyalins suivant la revendication 2, caractérisé en ce qu'il est réalisé en continu.

4. Utilisation des polyamides hyalins suivant la revendication 1 pour la fabrication d'éléments façonnés.